# EUROPÄISCHE PATENTANMELDUNG

(11) **EP 4 249 213 A1**
(43) Veröffentlichungstag der Anmeldung: **27.09.2023**
(21) Anmeldenummer: 22215606.9
(22) Anmeldetag: 21.12.2022
(51) Int. Cl.: B29C 49/78, B29C 49/06, B29C 49/36, B29K 67/00, B29L 31/00

(54) **VORRICHTUNG UND VERFAHREN ZUM UMFORMEN VON KUNSTSTOFFVORFORMLINGEN ZU KUNSTSTOFFBEHÄLTNISSEN MIT VARIABLEM DRUCKSPEICHER**

(30) Priorität: 22.03.2022 DE 102022106703
(71) Anmelder: Krones AG, 93073 Neutraubling (DE)
(72) Erfinder: Meier, Dominik, 93073 Neutraubling (DE); Betz, Christian, 93073 Neutraubling (DE)
(74) Vertreter: Hannke Bittner & Partner mbB Regensburg

(57) **Zusammenfassung**

Vorrichtung (1) zum Umformen von Kunststoffvorformlingen (10) zu Kunststoffbehältnissen mit wenigstens einer Umformungsstation (20), welche die Kunststoffvorformlinge durch Beaufschlagung mit einem fließfähigen und insbesondere gasförmigen Medium zu den Kunststoffbehältnissen umformt, wobei die Umformungsstation eine Beaufschlagungseinrichtung aufweist, welche die Kunststoffvorformlinge mit dem fließfähigen Medium beaufschlagt sowie wenigstens ein erstes Druckreservoir (2a), welches das fließfähige Medium unter einem vorgegebenen Druck speichert, dadurch gekennzeichnet, dass die Vorrichtung eine Druckschwankungsminderungseinrichtung (4) aufweist, welche dazu geeignet und bestimmt ist, Druckschwankungen in dem ersten Druckreservoir (2a) zu vermindern.

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt. Dabei werden in der Regel Kunststoffvorformlinge in Blasformen eingegeben und mit einem fließfähigen Medium, insbesondere Druckluft, teilweise aber auch Flüssigkeit, beaufschlagt und zu Kunststoffbehältnissen und insbesondere Kunststoffflaschen umgeformt.

Üblicherweise wird dabei Druckluft von einem Reservoir wie etwa einem Kompressor an einen Druckspeicher bzw. ein Druckreservoir zur Verfügung gestellt. Dieses Druckreservoir versorgt dann eine Vielzahl von Umformungsstationen mit dem gewünschten Luftdruck. Oftmals stehen mehrere derartige Druckluftreservoirs für mehrere unterschiedliche Druckstufen zur Verfügung.

Der Blasprozess beim Streckblasen von Kunststoffbehältern ist momentan mit mindestens zwei Druckstufen aufgebaut. In den meisten Fällen kommen sogar drei Druckstufen zum Einsatz, um einen Teil der Druckluft, welche beim Blasprozess verwendet wird, wieder zu recyceln. Der Druck der niedrigsten Druckstufe P1 liegt momentan im Bereich von 10 bar - 13 bar. Die höchsten Druckstufe P2 liegt zwischen 22 bar und 40 bar. Eine Zwischendruckstufe (oft als PI bezeichnet) liegt zwischen den erstgenannten Drücken.

Die Wahl des Druckniveaus hängt vom Behältnis und vom Recyclingpotenzial ab. Um zukünftig eine noch größere Lufteinsparung erzielen zu können, wird teilweise eine weitere Zwischenblasstufe eingesetzt. Diese wird im Folgenden mit P+ gekennzeichnet. Das Recycling in der Blasformmaschine läuft dabei auf folgende Weise ab.

Ausgehend von der mit der P2 (d. h. dem höchsten Druck) gefüllten Flasche wird in die Druckstufen PI und P+ recycelt, bis die Ringkanäle der einzelnen Druckstufen gefüllt sind. Anschließend folgt das Recycling in P1. Nach dem P1 Recycling wird das Restvolumen in der Flasche gegen die Umgebung entlastet. Um möglichst viel Luftvolumen wiederverwenden zu können, gibt es die klare Zielsetzung, dass der P1 Druck auf ein niedriges Niveau gesenkt werden soll.

Die Flaschenqualität ist im erheblichen Maße abhängig von dem P1 Druck, d. h. dem niedrigsten Druck. Denn während der P1 - Phase wird die Segmentgewichtsverteilung festgelegt. Störgrößen sind hierbei vor allem Druckschwankungen in dem P1 - Kanal bzw. dem P1 - Reservoir, welche die Robustheit des Prozesses verschlechtern und zu Ausschussbehältnissen führen. Dieses Problem verschärft sich erwiesenermaßen zunehmend, umso niedriger das P1 - Druckniveau wird. Die gravierende Folge daraus ist eine erhöhte Anzahl fehlerhafter Behältnisse mit der Folge, dass Einsparpotenzial aufgrund dieser Thematik nicht ausgeschöpft wird.

Der vorliegenden Erfindung liegt daher die Aufgabe zugrunde, die Qualität der hergestellten Behältnisse zu verbessern. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist wenigstens eine Umformungsstation auf, welche die Kunststoffvorformlinge durch Beaufschlagung mit einem fließfähigen und insbesondere gasförmigen Medium zu den Kunststoffbehältnissen umformt und insbesondere expandiert. Dabei weist die Umformungsstation eine Beaufschlagungseinrichtung auf, welche die Kunststoffvorformlinge mit dem fließfähigen Medium beaufschlagt, sowie wenigstens ein erstes Druckreservoir, welches das fließfähige Medium unter einem vorgegebenen Druck speichert.

Erfindungsgemäß weist die Vorrichtung eine Druckschwankungsminderungseinrichtung auf, welche dazu geeignet und bestimmt ist, Druckschwankungen in dem ersten Druckreservoir zu vermindern.

Bevorzugt handelt es sich bei der Vorrichtung um eine Blasformmaschine und insbesondere eine Streckblasmaschine. Besonders bevorzugt weist die Vorrichtung mehrere derartiger Umformungsstation auf. Bevorzugt sind diese Umformungsstationen an einem beweglichen und insbesondere an einem drehbaren Träger angeordnet.

Bevorzugt ist das wenigstens ein Druckreservoir als Ringkanal ausgebildet und bevorzugt ebenfalls an dem beweglichen und insbesondere drehbaren Träger angeordnet.

Bei einer bevorzugten Ausführungsform weist die Beaufschlagungseinrichtung eine Blasdüse auf, welche an eine Mündung der Kunststoffvorformlinge anlegbar ist, um diese so mit dem fließfähigen Medium, insbesondere Druckluft zu expandieren. Diese Beaufschlagungseinrichtung kann dabei bevorzugt, insbesondere mittels einer Ventileinrichtung in eine Strömungsverbindung mit dem Druckreservoir gebracht werden.

Bevorzugt weist die Umformungsstation eine Reckstange auf. Besonders bevorzugt weist die Umformungsstation eine zu öffnende und zu schließende Blasform auf.

Wie erwähnt, liegt der Kern der vorliegenden Erfindung darin, Druckschwankungen in dem Reservoir auszugleichen. Aus der Physik kennt man das Phänomen der Interferenz, d. h. der Überlagerung von Wellen. Überlagert man zwei Wellen mit gleicher Frequenz, so addieren sich die Wellen je nach Phasenverschiebung unterschiedlich auf. An einem bestimmten Ort und zu einem bestimmten Zeitpunkt kann es also passieren, dass sich die Auslenkung der resultierenden Welle vergrößert oder verkleinert.

Der Druckverlauf in dem Reservoir, beispielsweise dem Ringkanal kann über die Zeit durch eine (insbesondere sinusförmige) Welle dargestellt werden. Wird diese Welle von einer von einem Druckschwankungstilger oder Druckschwankungsminderer erzeugten Welle überlagert, deren Auslenkung zum betrachteten Zeitpunkt am betrachteten Ort genau entgegengesetzt ist, so wird die ursprüngliche Welle aufgrund destruktiver Interferenz ausgelöscht oder erheblich in ihrer Amplitude vermindert.

Die Druckschwankungsminderungseinrichtung bzw. der Druckschwankungstilger kann in seinem Aufbau beispielsweise einem Lautsprecher ähnlich sein. So werden über Bewegungen einer Membran oder eines Kolbens entsprechende Wellen in das Druckluftsystem bzw. das Druckluftreservoir induziert, welche den aus irgendwelchen Effekten wie Ventilöffnung und Schließen oder anderen Störgrößen entstehen. Eine Vorgehensweise wäre so gestaltet, dass die Druckwellen in dem Reservoir gemessen werden. Bevorzugt errechnet eine Prozessoreinrichtung und/oder eine Logik Frequenzamplitude und Phasenlage der vom Schwingungstilger induzierten Welle, welche dann von diesen erzeugt wird und die Welle im Ringkanal so überlagert, dass die Druckschwankungen minimiert bzw. ausgelöscht werden.

Bei einer bevorzugten Ausführungsform sind zwei oder mehrere Druckschwankungsminderungseinrichtungen vorgesehen, welche dem Druckreservoir zugeordnet sind. Falls das Druckreservoir beispielsweise als Ringkanal ausgebildet ist, können an diesem Ringkanal über dessen Umfang verteilt mehrere Druckschwankungsminderungseinrichtungen vorgesehen sein, beispielsweise zwei, drei oder auch mehrere Druckschwankungsminderungseinrichtungen. Dabei wäre es möglich und bevorzugt, dass diese Druckschwankungsminderungseinrichtungen von gemeinsam gesteuert werden.

Eine weitere Möglichkeit besteht in einem Ausgleich der Druckerhöhung durch kurzzeitige Volumenvergrößerung des Reservoirs. Hier ist der Gedanke, bei einem Druckanstieg das Volumen im Reservoir kurzzeitig so zu vergrößern, dass der Druckanstieg abgefedert wird. Die Volumenvergrößerung kann beispielsweise durch ein verschiebbares Element, welches von einem Antrieb wie beispielsweise einem Servomotor gesteuert wird, erreicht werden. Geht man von einem Reservoirvolumen von 2 l aus und einem P1 Druck von 6 bar, so könnte bei einem adiabaten System und einem kurzzeitigen Druckanstieg von 1 bar das Volumen um 0,33 I vergrößert werden.

Durch die Reduzierung der Druckschwankungen bzw. deren Auslöschung kann eine reproduzierbare Behältnisqualität mit hoher Robustheit auch bei geringen P1 Drücken von 4 bar - 6 bar sichergestellt werden. Dadurch kann das Recyclingpotenzial der Maschine erhöht werden. Dies bedeutet einen geringeren Luftverbrauch und somit geringere Betriebskosten und für die Maschine eine Steigerung der Maschineneffizienz und eine Einsparung von Ressourcen, was zusätzlich die Umweltfreundlichkeit der Maschine erhöht.

Bei einer weiteren vorteilhaften Ausführungsform weist die Vorrichtung ein zweites Druckreservoir auf, welches das fließfähige Medium unter einem zweiten vorgegebenen Druck speichert.

Vorteilhaft handelt es sich bei dem fließfähigen Medium um ein gasförmiges Medium und insbesondere um Druckluft. Besonders bevorzugt ist dieser zweite vorgegebene Druck anders bzw. unterscheidet sich von dem Erstdruck und ist insbesondere größer als der erste Druck.

Bevorzugt weist die Vorrichtung ein drittes Druckreservoir auf und bevorzugt auch ein viertes Druckreservoir.

Bei einer weiteren vorteilhaften Ausführungsform weist die Vorrichtung eine Ventileinheit auf, welche dazu geeignet ist, dass die Kunststoffvorformlinge mit unterschiedlichen Druckstufen des fließfähigen Mediums beaufschlagt werden, wobei diese Ventileinheit insbesondere der Umformungsstation zugeordnet ist. Besonders bevorzugt handelt es sich bei der Ventileinheit um einen Ventilblock. Besonders bevorzugt weist diese Ventileinheit wenigstens zwei, bevorzugt weist wenigstens zwei und bevorzugt wenigstens zwei Ventile auf.

Bevorzugt ist die Beaufschlagungseinrichtung über diese Ventile mit dem wenigstens einen und bevorzugt mit mehreren Druckreservoirs in Strömungsverbindung bringbar, so dass Druckluft von diesen Druckreservoirs zu der Beaufschlagungseinrichtung gelangen kann.

Bei einer weiteren vorteilhaften Ausführungsform ist ein Aufnahmevolumen des ersten Druckreservoirs veränderbar. Durch diese Volumenveränderung können wie oben erwähnt Druckschwankungen kompensiert werden.

Bei einer bevorzugten Ausführungsform weist die Vorrichtung eine Volumenveränderungseinrichtung auf (und/oder die Druckschwankungsminderungseinrichtung ist als Volumenveränderungseinrichtung ausgebildet, welche dazu geeignet und bestimmt ist, ein Aufnahmevolumen des ersten Druckreservoirs zu ändern. Weiterhin wäre es auch möglich, dass auch weiteren Druckreservoirs derartige Volumenveränderungseinrichtungen zugeordnet sind. Besonders ist diese Volumenveränderungseinrichtung (welche bevorzugt auf diese Weise auch als Druckschwankungsminderungseinrichtung wirkt) dazu geeignet und bestimmt, dass Aufnahmevolumen des Reservoirs um wenigstens 5 %, bevorzugt um wenigstens 10 %, bevorzugt um wenigstens 15 %, bevorzugt um wenigstens 20 % und bevorzugt um wenigstens 25 % geändert werden.

Bevorzugt kann das Aufnahmevolumen des oder der Reservoirs um höchstens 60 %, bevorzugt um höchstens 50 %, bevorzugt um höchstens 40 % und bevorzugt um höchstens 35 % geändert werden.

Bei einer bevorzugten Ausführungsform weist die Druckschwankungsminderungseinrichtung und/oder die Volumenveränderungseinrichtung eine Membran und/oder ein bewegliches Kolbenelement auf.

Bei einer bevorzugten Ausführungsform weist die Volumenveränderungseinrichtung eine Bewegungserzeugungseinrichtung und insbesondere eine elektrisch und/oder elektromagnetisch betriebene Bewegungserzeugungseinrichtung auf, wobei die Bewegungserzeugungseinrichtung insbesondere als Schwingungserzeugungseinrichtung ausgeführt ist. Dabei kann beispielsweise die Volumenveränderungseinrichtung in der Art eines Lautsprechers ausgeführt sein, der Volumenschwankungen mit einer vorgegebenen Frequenz auf das Reservoir aufbringen kann.

Bei einer weiteren vorteilhaften Ausführungsform weist die Vorrichtung wenigstens eine Sensoreinrichtung auf, welche dazu geeignet und bestimmt ist, Drücke und insbesondere Druckschwankungen innerhalb des Reservoirs zu erfassen. Mithilfe dieser Sensoreinrichtung kann die Druckschwankungsminderungseinrichtung gesteuert werden.

Bei einer bevorzugten Ausführungsform weist die Vorrichtung wenigstens zwei und bevorzugt wenigstens drei derartige Sensoreinrichtungen auf. Diese Sensoreinrichtungen können dabei beispielsweise innerhalb des Reservoirs, welches insbesondere als Ringkanal ausgestaltet ist angeordnet sein. Auf diese Weise können mit hoher Genauigkeit (auch lokale) Druckschwankungen erfasst werden.

Bevorzugt weist daher die Vorrichtung eine Steuerungseinrichtung auf, welche das Volumen des Reservoirs in Abhängigkeit von den von der Sensoreinrichtung erfassten Druckwerten steuert. So ist es beispielsweise möglich, dass eine Logik eine Frequenzamplitude und/oder Phasenlage der von einem Schwingungstilger oder der Schwingungsminderungseinrichtung induzierten Welle errechnet, welche dann von diesem erzeugt wird, um die Welle in den Reservoir so zu überlagern, dass die Druckschwankungen minimiert und bevorzugt ausgelöscht werden.

Bei einer weiteren bevorzugten Ausführungsform weist die Vorrichtung eine Erwärmungseinrichtung auf, welche die Kunststoffvorformlinge erwärmt, bevor diese den Umformungsstationen zugeführt werden.

Die vorliegende Erfindung ist weiterhin auf ein Verfahren zum Umformen von Kunststoffvorformlingen zu Kunststoffbehältnissen gerichtet, wobei mit wenigstens einer Umformungsstation, die Kunststoffvorformlinge durch Beaufschlagung mit einem fließfähigen und insbesondere gasförmigen Medium zu den Kunststoffbehältnissen umgeformt werden und wobei die Umformungsstation eine Beaufschlagungseinrichtung aufweist, welche die Kunststoffvorformlinge mit dem fließfähigen Medium beaufschlagt, sowie ein erstes Druckreservoir, welches das fließfähige Medium unter einem vorgegebenen Druck speichert.

Erfindungsgemäß weist die Vorrichtung eine Druckschwankungsminderungseinrichtung auf, welche Druckschwankungen in dem ersten Druckreservoir vermindert.

Bei einem bevorzugten Verfahren werden die Behältnisse mit wenigstens zwei und bevorzugt mit mehreren Drücken und/oder Druckstufen beaufschlagt. Vorteilhaft werden die Behältnisse mit wenigstens zwei, bevorzugt mit wenigstens drei unterschiedlichen Drücken und/oder Druckstufen beaufschlagt. Vorteilhaft werden die oben genannten Druckschwankungen insbesondere bei der geringsten und/oder allgemein den geringen Druckstufen vermindert.

Bei einem bevorzugten Verfahren enthält das genannte Druckreservoir einen Druck von mehr als zwei bar bevorzugt mehr als drei bar, bevorzugt mehr als vier bar. Bei einem weiteren bevorzugten Verfahren enthält das Druckreservoir einen Druck von weniger als 20 bar, bevorzugt weniger als 15 bar, bevorzugt weniger als 12 bar und bevorzugt weniger als 10 bar.

Bei einem bevorzugten Verfahren werden Druckschwankungen in dem ersten Druckreservoir durch eine Volumenänderung des ersten Druckreservoirs geändert und/oder vermindert. Bevorzugt erfolgen diese Volumenänderungen periodisch.

Bei einem weiteren bevorzugten Verfahren nimmt wenigstens eine Sensoreinrichtung Drücke und insbesondere Druckschwankungen innerhalb eines Reservoirs auf bzw. bestimmt solche, wobei insbesondere Frequenzen und/oder Amplituden dieser Druckschwankungen bestimmt werden. Auf Basis dieser Messergebnisse können die Druckschwankungen vermindert werden.

Bei einem weiteren bevorzugten Verfahren wird ein Volumen des Reservoirs wenigstens zeitweise periodisch geändert. Auch durch diese periodische Änderung kann Druckschwankungen entgegengewirkt werden.

Bei einem weiteren bevorzugten Verfahren wird das Aufnahmevolumen des Reservoirs in Abhängigkeit von den von der Sensoreinrichtung erfassten Drücken geändert.

Weitere Vorteile und Ausführungsformen ergeben sich aus den beigefügten Zeichnungen:

Darin zeigen:
- Fig. 1: eine Darstellung einer erfindungsgemäßen Vorrichtung zum Umformen von Kunststoffvorformlingen zu Kunststoffbehältnissen;
- Fig. 2: eine Darstellung von Druckschwankungen in einem Reservoir;
- Fig. 3: eine erste schematische Darstellung einer Druckschwankungsminderungseinrichtung;
- Fig. 4: eine zweite Darstellung einer Druckschwankungsminderungseinrichtung; und
- Fig. 5: eine weitere Darstellung einer Druckschwankungsminderungseinrichtung.

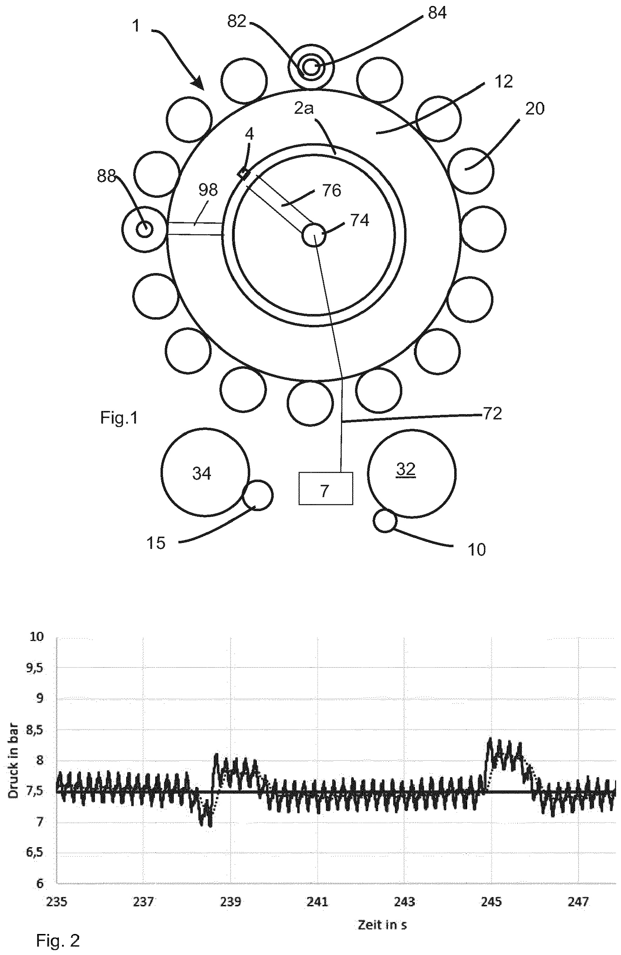

Fig. 1 zeigt eine Vorrichtung 1 zum Umformen von Kunststoffvorformlingen 10 zu Kunststoffbehältnisse 15. Diese Vorrichtung weist einen drehbaren Träger 12 auf, an dem eine Vielzahl von Umformungsstationen 20 angeordnet ist. Diese einzelnen Umformungsstationen weisen jeweils Blasformen 82 auf, die in ihrem Inneren einen Hohlraum 84 zum Expandieren der Kunststoffvorformlinge ausbilden. Das Bezugszeichen 88 kennzeichnet eine Reckstange, die dazu dient, die Kunststoffvorformlinge in ihrer Längsrichtung zu dehnen. Bevorzugt weisen sämtliche Umformungsstationen derartige Blasformen 82 sowie Reckstangen 88 auf. Bevorzugt liegt die Anzahl dieser Umformungsstationen zwischen 2 und 100, bevorzugt zwischen 4 und 60, bevorzugt zwischen 6 und 40.

Die Kunststoffvorformlinge 10 werden über eine erste Transporteinrichtung 32 wie insbesondere aber nicht ausschließlich einen Transportstern der Vorrichtung zugeführt. Über eine zweite Transporteinrichtung 34 werden die Kunststoffbehältnisse 15 abtransportiert.

Das Bezugszeichen 7 kennzeichnet eine Druckbereitstellungseinrichtung wie etwa einen Kompressor oder auch ein Druckluftanschluss. Die Druckluft wird über eine Verbindungsleitung 72 zu einem Drehverteiler 74 gefördert und von diesem über eine weitere Leitung 76 an das Reservoir 2a angegeben, bei dem es sich hier um einen Ringkanal handelt.

Neben diesem dargestellten Ringkanal 2a sind bevorzugt noch weitere Ringkanäle vorgesehen, die in der in Fig. 1 gezeigten Darstellung jedoch durch den Ringkanal 2a verdeckt sind, beispielsweise darunterliegen. Das Bezugszeichen 98 kennzeichnet eine Verbindungsleitung, welche die Druckluft an eine Umformungsstation 20 abgibt. Bevorzugt ist jeder der Ringkanäle über entsprechende Verbindungsleitungen mit sämtlichen Umformungsstationen verbunden.

Fig. 2 zeigt die Druckschwankungen in dem Reservoir 2a, d. h. dem Ringkanal 2a über die Zeit. Man erkennt periodische Druckschwankungen, die hier in einer Zeitspanne von 12 Sekunden auftreten. Diese Druckschwankungen wirken sich insbesondere bei geringen Drücken wie etwa dem P1 - Druck negativ aus.

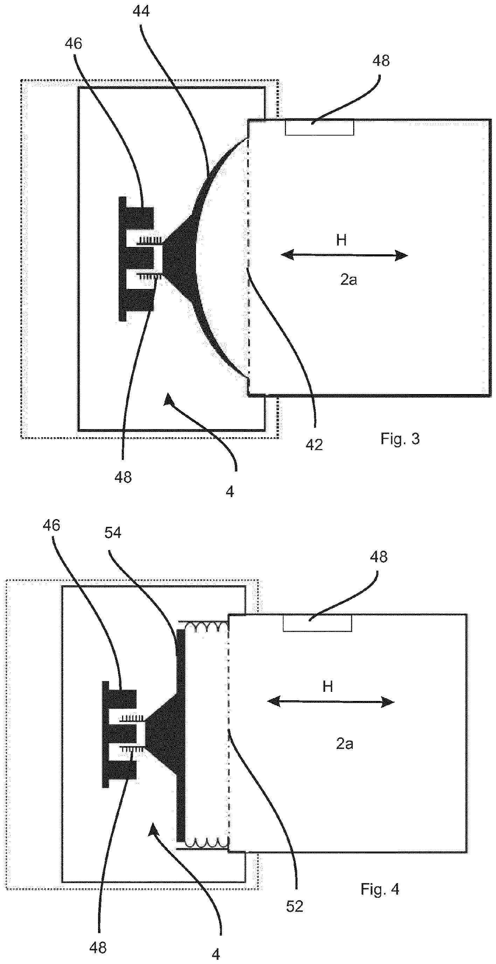

Fig. 3 zeigt eine erste Darstellung einer Druckschwankungsminderungseinrichtung 4. Dabei bezieht sich das Bezugszeichen 2a wiederum auf das Reservoir bzw. den Ringkanal. Das Bezugszeichen 48 kennzeichnet eine Sensoreinrichtung, welche dazu dient, Druckschwankungen aufzunehmen und insbesondere auch mit zeitlicher Abhängigkeit zu erfassen.

Das Bezugszeichen 46 kennzeichnet einen Permanentmagneten und das Bezugszeichen 48 eine Spule. Diese ist mechanisch mit einem Schwingungsteil wie etwa einer Membran 1 gekoppelt. Durch eine Bewegung dieser Membran in der horizontalen Richtung H kann das Volumen des Reservoirs 2a verändert werden und auch beispielsweise periodisch verändert werden. Auf diese Weise können Druckschwankungen im Inneren des Reservoirs 2a ausgeglichen werden.

Fig. 4 zeigt eine weitere Ausgestaltung einer Druckschwankungsminderungseinrichtung. Auch hier ist wiederum ein Permanentmagnet 46 und eine Spule 48 vorgesehen. Das Bezugszeichen 54 kennzeichnet hier ebenfalls ein schwingendes Element, wie etwa eine Platte. Auch durch eine Bewegung dieser Platte in der horizontalen Richtung H wird die Größe des Reservoirs 2a verändert und auf diese Weise kann Druckschwankungen entgegengewirkt werden.

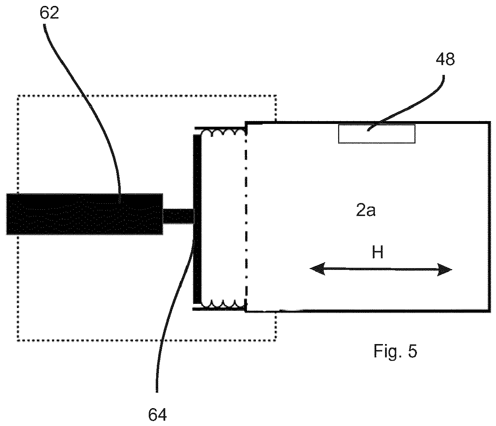

Fig. 5 zeigt eine weitere Ausgestaltung einer Druckschwankungsminderungseinrichtung 4. Bei dieser Ausgestaltung ist der motorische Antrieb wie etwa Linearmotor 62 vorgesehen, an dem wiederum eine Platte 64 befestigt ist, die in der horizontalen Richtung H beweglich ist, um das Volumen des Reservoirs 2a zu verändern.

Insgesamt können auf die beschriebene Weise Druckschwankungen innerhalb des Reservoirs ausgeglichen werden.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Fig. beschriebenes Merkmal auch ohne die Übernahme weiterer Merkmale aus dieser Fig. vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung (1) zum Umformen von Kunststoffvorformlingen (10) zu Kunststoffbehältnissen mit wenigstens einer Umformungsstation (20), welche die Kunststoffvorformlinge durch Beaufschlagung mit einem fließfähigen und insbesondere gasförmigen Medium zu den Kunststoffbehältnissen (15) umformt, wobei die Umformungsstation eine Beaufschlagungseinrichtung aufweist, welche die Kunststoffvorformlinge mit dem fließfähigen Medium beaufschlagt sowie wenigstens ein erstes Druckreservoir (2a), welches das fließfähige Medium unter einem vorgegebenen Druck speichert, **dadurch gekennzeichnet, dass**
die Vorrichtung eine Druckschwankungsminderungseinrichtung (4) aufweist, welche dazu geeignet und bestimmt ist, Druckschwankungen in dem ersten Druckreservoir (2a) zu vermindern.

2. Vorrichtung (1) nach Anspruch 1,
**dadurch gekennzeichnet, dass**
die Vorrichtung (1) mindestens ein zweites Druckreservoir aufweist, welches das fließfähige Medium unter einem zweiten vorgegebenen Druck speichert.

3. Vorrichtung (1) nach wenigstens einem der vorangegangenen Ansprüche,
**dadurch gekennzeichnet, dass**
die Vorrichtung eine Ventileinheit aufweist, welche dazu eingerichtet ist, dass die Kunststoffvorformlinge mit unterschiedlichen Druckstufen des fließfähigen Mediums beaufschlagt werden, wobei diese Ventileinheit insbesondere der Umformungsstation zugeordnet ist.

4. Vorrichtung (1) nach wenigstens einem der vorangegangenen Ansprüche,
**dadurch gekennzeichnet, dass**
ein Aufnahmevolumen des ersten Druckreservoirs (2a) veränderbar ist.

5. Vorrichtung (1) nach wenigstens einem der vorangegangenen Ansprüche,
**dadurch gekennzeichnet, dass**
die Vorrichtung (1) eine Volumenveränderungseinrichtung (42, 52) aufweist, welche dazu geeignet und bestimmt ist, das Aufnahmevolumen des ersten Druckreservoirs zu ändern.

6. Vorrichtung (1) nach dem vorangegangenen Anspruch,
**dadurch gekennzeichnet, dass**
die Volumenveränderungseinrichtung eine Membran oder ein bewegliches Kolbenelement aufweist.

7. Vorrichtung (1) nach wenigstens einem der vorangegangenen Ansprüche,
**dadurch gekennzeichnet, dass**
die Volumenveränderungseinrichtung eine Bewegungserzeugungseinrichtung aufweist, wobei die Bewegungserzeugungseinrichtung insbesondere als Schwingungserzeugungseinrichtung ausgeführt ist.

8. Vorrichtung (1) nach wenigstens einem der vorangegangenen Ansprüche,
**dadurch gekennzeichnet, dass**
die Vorrichtung eine Sensoreinrichtung (48) aufweist, welche dazu geeignet und bestimmt ist, Drücke und insbesondere Druckschwankungen innerhalb des Reservoirs zu erfassen.

9. Vorrichtung (1) nach dem vorangegangenen Anspruch,
**dadurch gekennzeichnet, dass**
die Vorrichtung eine Steuerungseinrichtung (48) aufweist, welche die Volumenabhängigkeit in Abhängigkeit von den von der Sensoreinrichtung erfassten Druckwerten steuert.

10. Verfahren zum Umformen von Kunststoffvorformlingen (10) zu Kunststoffbehältnissen (15) wobei mit wenigstens einer Umformungsstation (20), die Kunststoffvorformlinge durch Beaufschlagung mit einem fließfähigen und insbesondere gasförmigen Medium zu den Kunststoffbehältnissen umgeformt werden und wobei die Umformungsstation eine Beaufschlagungseinrichtung aufweist, welche die Kunststoffvorformlinge mit dem fließfähigen Medium beaufschlagt sowie wenigstens ein erstes Druckreservoir (2a), welches das fließfähige Medium unter einem vorgegebenen Druck speichert, **dadurch gekennzeichnet, dass**
die Vorrichtung eine Druckschwankungsminderungseinrichtung (4) aufweist, welche Druckschwankungen in dem ersten Druckreservoir (2a) vermindert.

11. Verfahren nach Anspruch 10,
**dadurch gekennzeichnet, dass**
die Druckschwankungen in dem ersten Druckreservoir (2a) durch Volumenänderungen des ersten Druckreservoirs (2a) vermindert werden.

12. Verfahren nach wenigstens einem der vorangegangenen Ansprüche 10 - 11,
**dadurch gekennzeichnet, dass**
eine Sensoreinrichtung Drücke und insbesondere Druckschwankungen innerhalb des Reservoirs bestimmt, wobei insbesondere Frequenzen und/oder Amplituden dieser Druckschwankungen bestimmt werden.

13. Verfahren nach wenigstens einem der vorangegangenen Ansprüche,
**dadurch gekennzeichnet, dass**
das Volumen des Reservoirs wenigstens zeitweise periodisch geändert wird.

14. Verfahren nach Anspruch 12 oder 13,
**dadurch gekennzeichnet, dass**
das Aufnahmevolumen des Reservoirs in Abhängigkeit von den von der Sensoreinrichtung erfassten Drücken geändert wird.
